# EUROPÄISCHE PATENTANMELDUNG

(11) **EP 0 805 413 A1**
(43) Veröffentlichungstag der Anmeldung: **05.11.1997**
(21) Anmeldenummer: 97106951.3
(22) Anmeldetag: 24.04.1997
(51) Int. Cl.: G06K 19/077

(54) **Verfahren zur Herstellung einer Trägeranordnung zum Einbau in eine kontaktlose Chipkarte**

(30) Priorität: 24.04.1996 DE 19616404
(71) Anmelder: SIEMENS AKTIENGESELLSCHAFT, 80333 München (DE)
(72) Erfinder: Hoffelder, Bernd, 67354 Römerberg (DE)

(57) **Zusammenfassung**

Die Trägeranordnung umfaßt eine Trägerfolie (1), auf der zumindest eine einlagige Antennenspule (3) lagefixiert angeordnet ist. Die Antennenspule (3) wird im Wickelverfahren mittels einer metallischen Wickelaufnahme (2) ausgebildet. Das Aufbringen der Antennenspule (3) erfolgt durch Aufsetzen der Wickelaufnahme (2) und Wickeln der Antennenspule (3) unmittelbar auf der Trägerfolie (1) und anschließendes Einbetten der Antennenspule (3) in die Trägerfolie (1) mittels Ultraschalleinwirkung.

## Beschreibung

Die Erfindung betrifft ein Verfahren zur Herstellung einer Trägeranordnung mit einer Trägerfolie, auf der zumindest eine einlagige Antennenspule lagefixiert angeordnet ist, bei dem die Antennenspule im Wickelverfahren mittels einer Wickelaufnahme ausgebildet wird.

Bei kontaktlosen Chipkarten wird die zum Betreiben des in der Chipkarte enthaltenen Halbleiterchips nötige Energie in allgemeinster Form mittels elektromagnetischer Wellen von einem Terminal zur Chipkarte übertragen. Auch der Datenverkehr zwischen dem Terminal und der Chipkarte erfolgt auf diesem Weg. Zu diesem Zweck sind sowohl im Terminal als auch auf der Chipkarte Antennenspulen vorgesehen, die die elektromagnetischen Wellen senden und empfangen. In der Chipkarte muß eine aus einem Halbleiterchip und der damit verbundenen Antennenspule bestehende Transpondereinheit untergebracht werden. Oftmals wird die Transpondereinheit an einem anderen Ort gefertigt als die Chipkarte, so daß die Gefahr einer Beschädigung oder Deformation der Spule auf dem Transportweg besteht.

Zum Schutz beim Transport ist es deshalb aus der DE 44 10 732 A1 bekannt, eine Trägeranordnung mit einer Trägerfolie zu bilden, auf der zumindest eine Transpondereinheit, die mit einem Halbleiterchip und einer damit verbundenen Antennenspule gebildet ist, angeordnet ist. Diese Trägeranordnung ist zur Weiterverarbeitung in eine kontaktlose Chipkarte bestimmt. Demnach ist es bisher üblich, die Spule mit Hilfe einer externen Wickelaufnahme zunächst als Luftspule zu wickeln und die einzelnen Spulendrahtwindungen danach in der Wickelaufnahme miteinander zu "verbacken". Anschließend wird die Wickelspule, die in diesem Stadium nur eine fragile Einheit bildet, von der Wickelaufnahme entfernt und danach auf die Trägerfolie aufgeklebt. Problematisch bei diesem Verfahren ist insbesondere, daß durch das Spulenhandling die ursprüngliche Geometrie bzw. die Abmessungen der Spule mehr oder weniger verloren gehen. Dies kann einen negativen Einfluß auf die Spulengüte bzw. die Übertragungseigenschaften haben. Außerdem kann die aufgeklebte Wickelspule z. B. durch eine flächige Ultraschallsonotrode nicht ohne weiteres in die Trägerfolie eingebettet werden, da der Kleber aufschmelzen würde.

In der zuvor genannten DE 44 10 732 A1 wird außerdem ein vom zuvor genannten bekannten Verfahren prinzipiell verschiedenes Verfahren vorgeschlagen, bei dem die Spulendrahtwindungen ohne Bereitstellung einer zuvor gefertigten Wickelspule mittels einer Verlege/Verbindungseinrichtung unmittelbar auf einem Substrat verlegt werden. Gleichzeitig mit dem Verlegen des Spulendrahtes zur Ausbildung der Spule erfolgt zumindest stellenweise eine Verbindung des Spulendrahtes mit dem Substrat, so daß die auf dem Substrat verlegte Spule formhaltig wird. Dadurch erübrigt sich ein separater Wickelvorgang und das sonst erforderliche "Verbacken" der einzelnen Spulendrahtwindungen miteinander. Die Verbindung, also das Einschmelzen des Spulendrahtes, kann mittels Thermokompression oder beispielsweise auch mittels Ultraschalleinwirkung erfolgen.

In der Fertigungspraxis ist dieses Verfahren jedoch insbesondere hinsichtlich der bei einem Einschmelzen des gesamten Spulendrahtes resultierenden Taktzeiten nachteilig. Wenn die eingesetzte Verlege/Verbindungs-Einrichtung, die zweiachsig über die Ebene des Substrats bewegt wird, nicht nur an einzelnen Verbindungsstellen sondern über die gesamte Länge des Spulendrahtes eine Einschmelzung vornehmen soll, so ist die erforderliche Apparatur aufwendig und der Fertigungsprozeß selbst außerordentlich zeitaufwendig. Grundsätzlich kann zwar auch eine aus der Ebene der Trägerfolie herausstehende Antennenspule weiterverarbeitet, also beispielsweise durch Laminiertechnik in eine Chipkarte eingearbeitet werden. Dies ist jedoch fertigungstechnisch unvorteilhaft.

Aufgabe der Erfindung ist es somit, ein verbessertes Verfahren der eingangs genannten Art anzugeben.

Die vorliegende Aufgabe wird bei einem Verfahren der eingangs genannten Art durch folgende Verfahrensschritte gelöst:
- Aufsetzen der Wickelaufnahme direkt auf die Trägerfolie,
- Wickeln der Antennenspule unmittelbar auf der Trägerfolie,
- Einbetten der gewickelten Antennenspule in die Trägerfolie mittels Ultraschalleinwirkung und anschließendes Entfernen der Wickelaufnahme.

Die Erfindung wird nachfolgend anhand eines Ausführungsbeispieles mit Hilfe einer Figur, die eine Ansicht von oben auf eine Trägerfolie während des Herstellungsprozesses zeigt, näher erläutert.

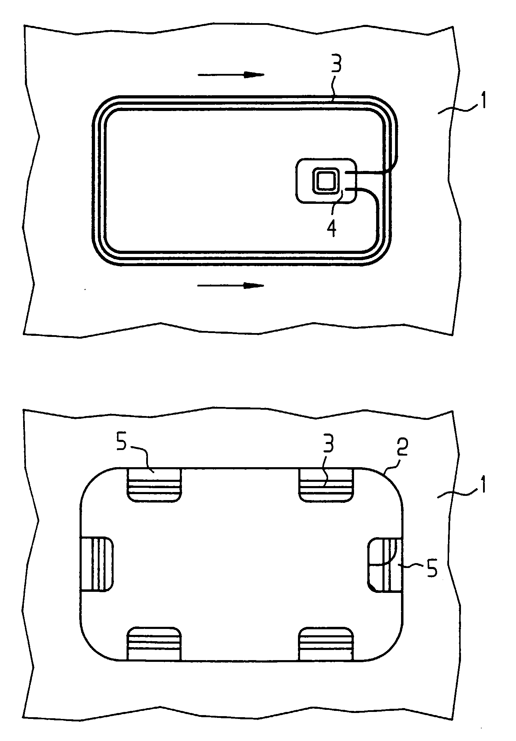

Die Figur zeigt einen Teil einer bandförmigen Trägerfolie 1, wobei im oberen Teil eine fertig aufgebrachte Antennenspule 3 und ein damit elektrisch verbundener Halbleiterchip 4 schematisch angedeutet sind. Im unteren Teil der Figur ist der Umriß einer exakt auf der Trägerfläche 1 aufliegenden Wickelaufnahme 2 schematisch angedeutet. Der genaue Umriß der beispielsweise metallischen Wickelaufnahme 2 ist für das erfindungsgemäße Verfahren nicht entscheidend. Es ist jedoch vorteilhaft, wenn die Wickelaufnahme 2, wie dargestellt, mit in ihrem Randbereich angeordneten Ausnehmungen 5 ausgebildet ist. Die unter den Randbereich reingewickelten circa 4 - 5 Spulenwindungen sind in der Figur ebenfalls angedeutet.

Die Trägerfolie kann aus allen laminierfähigen Kunststoffen, beispielsweise PVC, PET, etc. bestehen und eine typische Dikke von etwa 50 - 450 µm aufweisen. Zum Bewickeln werden üblicherweise lackisolierte Kupfer-Wickeldrähte (wärmebeständiger lötbarer oder Backlack) mit etwa 50 bis 300 µm Durchmesser verwendet. Würde die Spule 3 einfach nur auf die Trägerfolie 1 aufgelegt, so würde demnach etwa eine Verdoppelung der Dikke der Transpondereinheit resultieren. Erfindungsgemäß wird die Spule 3 nach dem Wickelvorgang jedoch mittels Ultraschall mindestens teilweise in die Trägerfolie 1 eingebettet, wobei einerseits der unterschiedliche Schmelzpunkt der Trägerfolie (ca. 120°C) und einer wärmebeständigen Kupferlackdrahtbeschichtung (gut 300°C) ausgenutzt werden kann. Ein sehr günstiger Effekt tritt andererseits bei der Einbettung von Backlackdrähten auf, da die Schmelzpunkte der Trägerfolie (ca. 120°C) und der Backlackbeschichtung (ca. 150°C) sehr nahe liegen und somit eine zusätzliche Fixation durch das Zusammenschmelzen des Backlacks und der Trägerfolie erreicht wird. Die Ultraschallsonotrode kann vorteilhaft in die Ausnehmungen 5 der Wickelaufnahme 2 eingeführt werden. Dabei hat sich einen wellenförmige Riffelung der Sonotrode bewährt, die eine hohe Anzahl von punktuellen Einbettungen der Spulenwicklungen mit gleichzeitiger hochwertiger Parallelität der Antenne gewährleistet.

Es hat sich außerdem als günstig erwiesen, vor dem Wickeln der Antennenspule zunächst eine Fixierung der aufgesetzten Wickelaufnahme 2 auf der Trägerfolie 1 durch einen in die Wickelaufnahme 2 integrierten, nach unten gerichteten Absatz vorzunehmen, der durch die im Zuge der Vorbereitung der Trägerfolie 1 zur Aufnahme der Drähte sowie des Chips sowieso freigestanzte Freisparung für die Chipimplementierung in einen unterhalb der Trägerfolie 1 befindlichen Gegenträger einrastet.

Die erfindungsgemäßen Vorteile bestehen zunächst darin, daß die Geometrie der Spule exakt erhalten bleibt, so daß diese optimale Übertragungseigenschaften besitzt. Außerdem ergibt sich eine Reduzierung der Taktzeiten auf etwa ein viertel des bisherigen Wertes. Die bisherigen Klebe- bzw. Verbackungsvorgänge entfallen.

## Patentansprüche

1. Verfahren zur Herstellung einer Trägeranordnung mit einer Trägerfolie (1), auf der zumindest eine einlagige Antennenspule (3) lagefixiert angeordnet ist, bei dem die Antennenspule (3) im Wickelverfahren mittels einer Wickelaufnahme (2) ausgebildet wird,
**gekennzeichnet** durch
folgende Verfahrensschritte:
- Aufsetzen der Wickelaufnahme (2) direkt auf die Trägerfolie (1),
- Wickeln der Antennenspule (3) unmittelbar auf der Trägerfolie (1),
- Einbetten der gewickelten Antennenspule (3) in die Trägerfolie (1) mittels Ultraschalleinwirkung und anschließendes Entfernen der Wickelaufnahme (2).
